# EUROPÄISCHE PATENTSCHRIFT

(11) **EP 1 453 919 B1**
(45) Veröffentlichungstag und Bekanntmachung des Hinweises auf die Patenterteilung: **16.03.2011**
(21) Anmeldenummer: 02790450.7
(22) Anmeldetag: 28.11.2002
(51) Int. Cl.: C09B 62/085, C09B 62/51

(54) **REAKTIVE AZOFARBSTOFFE, VERFAHREN ZU IHRER HERSTELLUNG UND IHRE VERWENDUNG**
REACTIVE AZO DYES, METHOD FOR THE PRODUCTION AND USE THEREOF
COLORANTS AZOIQUES REACTIFS, LEUR PROCEDE DE PREPARATION ET LEUR UTILISATION

(30) Priorität: 30.11.2001 DE 10159001
(43) Veröffentlichungstag der Anmeldung: 08.09.2004
(73) Patentinhaber: DyStar Colours Deutschland GmbH, 65926 Frankfurt am Main (DE)
(72) Erfinder: MEIER, Stefan, 60529 Frankfurt am Main (DE); RUSS, Werner, 65439 Flörsheim (DE); WÖRNER, Jörg, 63468 Bruchköbel (DE)
(86) Internationale Anmeldenummer: PCT/EP2002/013410
(87) Internationale Veröffentlichungsnummer: WO 2003/046087

(56) Entgegenhaltungen:
- EP-A- 0 922 735
- WO-A-02/16504
- WO-A-96/10610
- DE-A- 19 810 906

## Beschreibung

Die vorliegende Erfindung liegt auf dem Gebiet der faserreaktiven Farbstoffe. Aus den Dokumenten DE-A-4434989, DE 19600765, DE 19810906 und EP-A 922735 sind bereits Farbstoffe bekannt, die mit den nachfolgend beschriebenen erfindungsgemäßen Farbstoffen strukturelle Ähnlichkeiten aufweisen, sich aber bezüglich der Reaktivanker oder in der Art der Kupplungskomponente unterscheiden. Letzteres trifft auch auf die WO02/16504 A1 zu, deren Kupplungskomponente eine sulfomethylierte Aminogruppe aufweist. Diese bekannten Farbstoffe weisen eine Reihe von technischen Nachteilen beim Färben von Textilmaterialien auf, die es zu verbessern galt.

Überraschenderweise wurde nun gefunden, dass sich die nachfolgenden Farbstoffe der allgemeinen Formel (1) vorteilhaft von den bekannten Farbstoffen abheben.

Die vorliegende Erfindung betrifft Reaktivfarbstoffe der allgemeinen Formel (1) 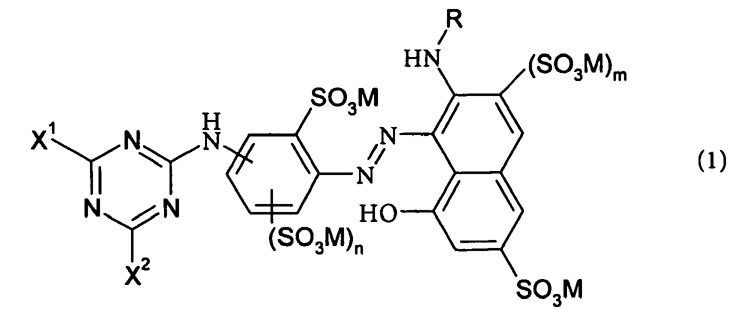 worin
R für Wasserstoff oder Alkyl steht
X¹ Halogen, Amino, gegebenenfalls substituiertes Amino, oder X² bedeutet,
X² einen Substituenten der allgemeinen Formel (2) bedeutet 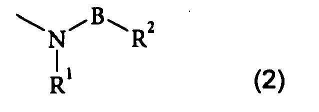 worin
R¹ für substituiertes oder unsubstituiertes Aryl steht,
B Alkylen, das durch ein Sauerstoffatom unterbrochen sein kann, bedeuten; und
R² einen Rest -SO₂CH=CH₂ oder -SO₂CH₂CH₂Z bedeutet, worin Z für eine Gruppierung steht, die durch Einwirkung von Alkali eliminiert werden kann;
n und m für 0 oder 1 stehen und
M für Wasserstoff, Ammonium, ein Alkalimetall oder das Äquivalent eines Erdalkalimetalls steht.

In der allgemeinen Formel (1) kann ein für M stehendes Alkalimetall insbesondere Lithium, Natrium und Kalium sein, während als Erdalkalimetall insbesondere Calcium in Frage kommt. Bevorzugt steht M für Wasserstoff oder Natrium.

Für X¹ stehendes Halogen bedeutet insbesondere Fluor oder Chlor, und substituiertes Amino bedeutet insbesondere Amino, das durch einen Arylrest substituiert ist, der einen oder mehrere faserreaktive Reste -SO₂CH=CH₂ oder - SO₂CH₂CH₂Z', worin Z' für eine Gruppierung steht, die durch Einwirkung von Alkali eliminiert werden kann, trägt. Vorzugsweise ist Amino durch m-Sulfatoethylsulfonylphenyl oder p-Sulfatoethylsulfonylphenyl substituiert.

Für R stehendes Alkyl ist bevorzugt (C₁-C₈)-Alkyl und besonders bevorzugt (C₁-C₄)-Alkyl. Beispiele für derartige Alkylgruppen sind Methyl, Ethyl, n-Propyl, i-Propyl, n-Butyl, i-Butyl, sek.-Butyl und tert.-Butyl.

Für R¹ stehendes Aryl ist insbesondere Phenyl, das auch durch zum Beispiel (C₁-C₄)-Alkyl, (C₁-C₄)-Alkoxy, Chlor, Fluor oder die SO₃H-Gruppe ein- oder mehrfach substituiert sein kann. Vorzugsweise ist R¹ ein Phenyl oder ein Arylrest, der eine Sulfogruppe trägt.

Für B stehendes Alkylen ist bevorzugt (C₁-C₈)-Alkylen und besonders bevorzugt (C₁-C₄)-Alkylen. Beispiele für derartige Alkylengruppen sind Methylen, Ethylen, n-Propylen, i-Propylen und Butylen. Ein durch ein Sauerstoffatom unterbrochenes Alkylen ist bevorzugt die Gruppe -(CH₂)₂-O-(CH₂)₂-.

Für Z stehende Reste, die durch Einwirkung von Alkali, d.h. also unter Färbebedingungen, eliminiert werden können, sind beispielsweise Chlor, Brom, Sulfato, Thiosulfato, Phosphato, (C₂-C₅)-Alkanoyloxy wie z.B. Acetyloxy, Benzoyloxy, Sulfobenzoyloxy oder p-Toluylsulfonyloxy, wobei Sulfato bevorzugt ist.

Die Gruppen "Sulfato", "Thiosulfato" und "Phosphato" schließen sowohl deren Säureform als auch deren Salzform ein. Demgemäß entsprechen Thiosulfatogruppen der allgemeinen Formel -S-SO₃M, Phosphatogruppen der allgemeinen Formel -OPO₃M₂ und Sulfatogruppen der allgemeinen Formel -OSO₃M, in welchen M die obengenannte Bedeutung besitzt.

Bevorzugte erfindungsgemäße Reaktivfarbstoffe sind solche der allgemeinen Formel (1) in denen der Rest der allgemeinen Formel (2) einem der Reste (2-1) bis (2-4) entspricht 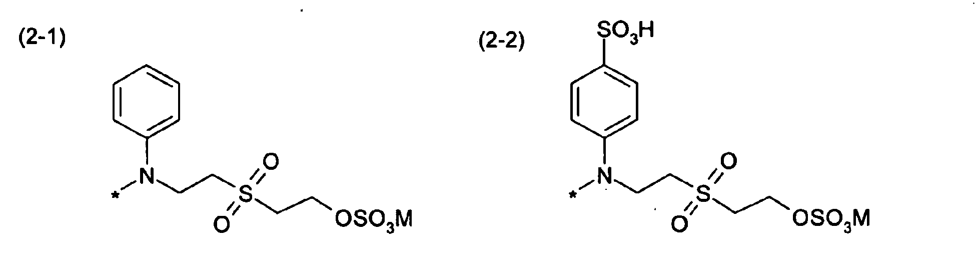 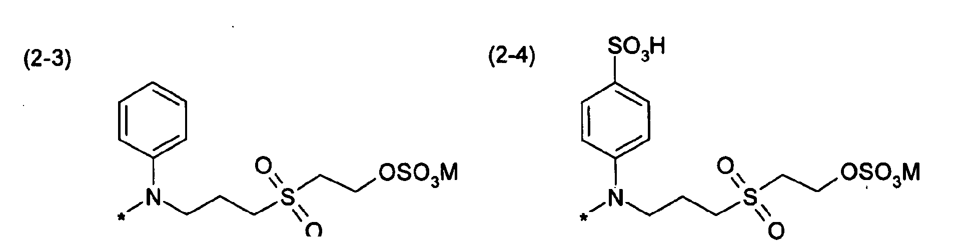 wobei M wie oben angegeben definiert ist

Besonders bevorzugt sind die erfindungsgemäßen Farbstoffe der Formeln (1a) bis (1 b) 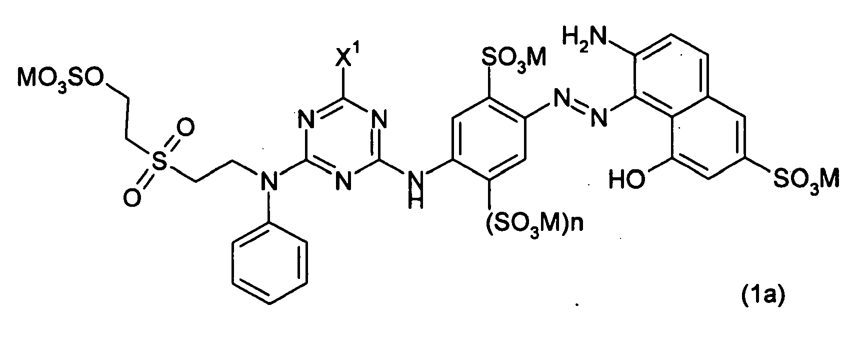 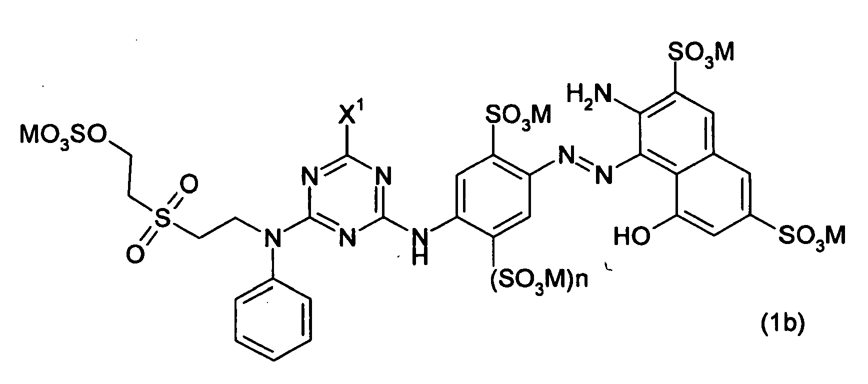 worin M, n und X¹ die oben angegebene Bedeutung haben.

Die erfindungsgemäßen Reaktivfarbstoffe der allgemeinen Formel (1) liegen in der Regel als Präparation in fester oder in flüssiger (gelöster) Form vor. In fester Form enthalten sie im allgemeinen die bei wasserlöslichen und insbesondere faserreaktiven Farbstoffen üblichen Elektrolytsalze, wie Natriumchlorid, Kaliumchlorid und Natriumsulfat, und können des weiteren die in Handelsfarbstoffen üblichen Hilfsmittel enthalten, wie Puffersubstanzen, die einen pH-Wert in wäßriger Lösung zwischen 3 und 7 einzustellen vermögen, wie Natriumacetat, Natriumborat, Natriumhydrogencarbonat, Natriumdihydrogenphosphat, Natriumtricitrat und Dinatriumhydrogenphosphat, geringe Mengen an Sikkativen oder, falls sie in flüssiger, wäßriger Lösung (einschließlich des Gehaltes von Verdickungsmitteln, wie sie bei Druckpasten üblich sind) vorliegen, Substanzen, die die Haltbarkeit dieser Präparationen gewährleisten, wie beispielsweise schimmelverhütende Mittel. Bevorzugt liegen die erfindungsgemäßen Reaktivfarbstoffe der allgemeinen Formel (1) als Farbstoffpulver oder als Farbstoffgranulat mit einem Gehalt von 10 bis 80 Gew.-%, bezogen auf das Pulver bzw. das Granulat, an einem Elektrolytsalz, das auch als Stellmittel bezeichnet wird, vor. Granulate weisen insbesondere Korngrößen von 50 bis 500 µm auf. Diese festen Präparationen können zudem die erwähnten Puffersubstanzen in einer Gesamtmenge von bis zu 10 Gew.-%, bezogen auf die Präparation enthalten. Sofern die Farbstoffe in wässriger Lösung vorliegen, so beträgt der Gesamtfarbstoffgehalt in diesen wässrigen Lösungen bis zu etwa 50 Gew.%, wie beispielsweise zwischen 5 und 50 Gew.-%., wobei der Elektrolytsalzgehalt in diesen wäßrigen Lösungen bevorzugt unterhalb 10 Gew.-%, bezogen auf die wässrige Lösung, beträgt. Die wässrigen Lösungen (Flüssigpräparationen) können die erwähnten Puffersubstanzen in der Regel in einer Menge von bis zu 10 Gew.-%, bevorzugt bis zu 2 Gew.-%, enthalten.

Erfindungsgemäße Reaktivfarbstoffe der allgemeinen Formel (1), können bei gleichem Chromophor hinsichtlich der faserreaktiven Gruppe R² unterschiedliche Struktur besitzen. Insbesondere kann bei gleichem Chromophor R² zum einen - SO₂CH=CH₂ und zum anderen -SO₂CH₂CH₂Z, besonders bevorzugt β-Sulfatoethylsulfonyl, bedeuten. Dabei kann der Anteil des Farbstoffes in Vinylsulfonyl-Form bei bis zu etwa 30 Mol-%, bezogen auf den jeweiligen Farbstoffchromophor, liegen. Bevorzugt liegt der Anteil an Vinylsulfonyl-Farbstoff zu ß-ethylsubstituiertem Farbstoff im Molverhältnis zwischen 5:95 und 30:70.

Gegenstand der vorliegenden Erfindung sind ferner Verfahren zur Herstellung der Reaktivfarbstoffe der allgemeinen Formel (1).

Diese können dadurch erhalten werden dass beispielsweise eine Verbindung der allgemeinen Formel (3) 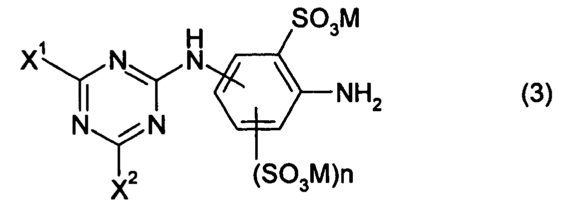 worin X¹, X² , M und n wie oben angegeben definiert sind, diazotiert und mit einer Verbindung der Formel (4) umgesetzt wird.

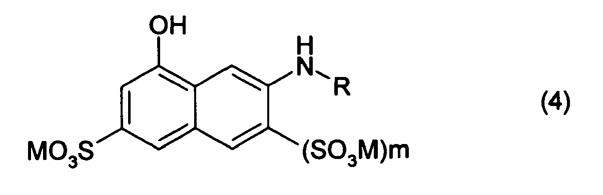

Alternativ kann auch eine Verbindung der allgemeinen Formel (5) 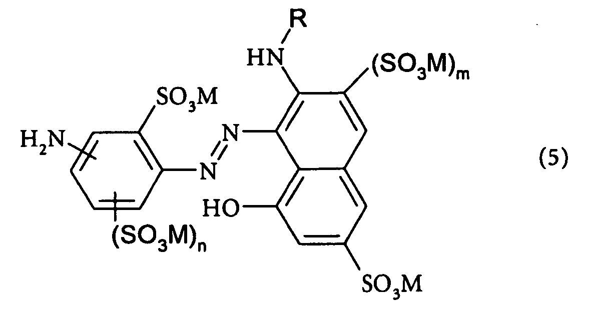 in der R, M, m und n wie oben angegeben definiert sind, mit einem Halogentriazin der allgemeinen Formel (6) 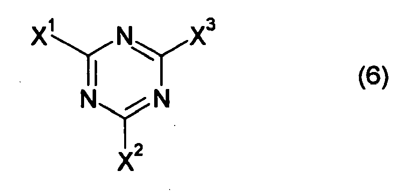 worin X¹ und X² wie oben angegeben definiert sind und X³ Fluor oder Chlor bedeutet, kondensiert werden.

Die Verbindung der allgemeinen Formel (6) wiederum kann aus Trifluortriazin oder Trichlortriazin und einer bzw. zwei Verbindungen der allgemeinen Formel (2') erhalten werden.

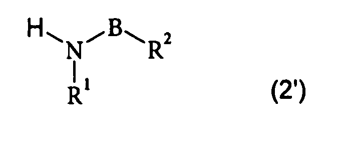

Die Verbindungen der allgemeinen Formel (1), in denen X² einen Rest der allgemeinen Formel (2) darstellt, lassen sich auch alternativ durch Umsetzung einer Verbindung der allgemeinen Formel (5) mit Trihalogentriazin und anschließender Kondensation mit einem Amin der allgemeinen Formel (2') herstellen.

Farbstoffe der allgemeinen Formel (1), in denen X¹ gleich X² bedeutet und nicht Halogen ist, erhält man durch Kondensation von Farbstoffen der allgemeinen Formel (1), in denen X¹ gleich Halogen ist, durch Umsetzung mit einem reaktiven Amin der allgemeinen Formel (2') in wässriger Lösung.

Die Verbindungen der allgemeinen Formel (3) sind auf verschiedenen Wegen zugänglich.

Entspricht X² einem Rest der Formel (2), so erhält man die Kondensationsprodukte durch Reaktion von Halogentriazinen (6) mit Diaminobenzolsulfonsäuren oder Diaminobenzoldisulfonsäuren, vorzugsweise 1,3-Diaminobenzol-4-sulfonsäure, 1,4-Diaminobenzol-2-sulfonsäure sowie 1,4-Diaminobenzol-2,5-disulfonsäure und 2,4-Diaminobenzol-1,5-disulfonsäure, oder durch Kondensation eines Trichlor- oder Trifluortriazins mit Diaminobenzolsulfonsäuren oder Diaminobenzoldisulfonsäuren und anschließender Kondensation mit einem Amin der allgemeinen Formel (2').

Die oben genannten Diazotierungs-, Kupplungs- und Kondensationsreaktionen sind dem Fachmann an sich bekannt und können in allgemein üblicher, in der einschlägigen Literatur ausführlich beschriebenen Art und Weise ausgeführt werden.

Die erfindungsgemäßen Farbstoffe der allgemeinen Formel (1) werden bei den oben beschriebene Herstellungsverfahren als Lösung oder Suspension erhalten und können durch Aussalzen isoliert werden. Sie können auch sprühgetrocknet werden, auch ein Eindampfen der Lösung oder Suspension ist möglich.

Die erfindungsgemäßen Reaktivfarbstoffe der allgemeinen Formel (1) besitzen wertvolle anwendungstechnische Eigenschaften. Sie werden zum Färben und Bedrucken von hydroxy- und/oder carbonamidgruppenhaltigen Materialien, beispielsweise in Form von Flächengebilden, wie Papier und Leder oder von Folien, wie beispielsweise aus Polyamid oder in der Masse, wie beispielsweise von Polyamid und Polyurethan, insbesondere aber in Form von Fasern der genannten Materialien verwendet. Bevorzugt werden sie zum Färben und Bedrucken cellulosehaltiger Fasermaterialien aller Art verwendet. Außerdem eignen sie sich auch zum Färben oder Bedrucken von hydroxygruppenhaltigen Fasern, die in Mischgeweben enthalten sind, z. B. von Gemischen aus Baumwolle mit Polyesterfasern oder Polyamidfasern. Es ist auch möglich, mit ihnen Textilien oder Papier nach dem Inkjet-Verfahren zu bedrucken.

Die vorliegende Erfindung betrifft somit auch die Verwendung der erfindungsgemäßen Reaktivfarbstoffe der allgemeinen Formel (1) zum Färben oder Bedrucken der genannten Materialien bzw. Verfahren zum Färben oder Bedrucken solcher Materialien in an und für sich üblichen Verfahrensweisen, bei welchen man einen oder mehrere erfindungsgemäße Reaktivfarbstoffe der allgemeinen Formel (1) als Farbmittel einsetzt.

Vorteilhafterweise können die bei der Synthese anfallenden Lösungen der erfindungsgemäßen Reaktivfarbstoffe der allgemeinen Formel (1), gegebenenfalls nach Zusatz einer Puffersubstanz, gegebenenfalls auch nach Konzentrieren oder Verdünnen, direkt als Flüssigpräparation der färberischen Verwendung zugeführt werden.

Bevorzugt kommen die genannten Materialien in Form von Fasermaterialien zur Anwendung, insbesondere in Form von Textilfasern, wie Geweben oder Garnen, wie in Form von Strängen oder Wickelkörpern.

Hydroxygruppenhaltige Materialien sind solche natürlichen oder synthetischen Ursprungs, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern. Regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid-6,6, Polyamid-6, Polyamid-11 und Polyamid-4.

Die erfindungsgemäßen Reaktivfarbstoffe der allgemeinen Formel (1) lassen sich auf den genannten Substraten, insbesondere auf den genannten Faser-materialien, nach den für wasserlösliche, insbesondere nach den für faserreaktive Farbstoffe bekannten Anwendungstechniken applizieren und fixieren.

So erhält man mit ihnen auf Cellulosefasern nach den Ausziehverfahren aus langer Flotte unter Verwendung von verschiedensten säurebindenden Mitteln und gegebenenfalls neutralen Salzen, wie Natriumchlorid oder Natriumsulfat, Färbungen mit sehr guten Farbausbeuten. Man färbt bevorzugt in wässrigem Bad bei Temperaturen zwischen 40 und 105°C, gegebenenfalls bei einer Temperatur bis zu 130°C unter Druck, und gegebenenfalls in Gegenwart von üblichen Färbereihilfsmitteln. Man kann dabei so vorgehen, daß man das Material in das warme Bad einbringt und dieses allmählich auf die gewünschte Färbetemperatur erwärmt und den Färbeprozess bei dieser Temperatur zu Ende führt. Die das Ausziehen der Farbstoffe beschleunigenden Neutralsalze können dem Bade gewünschtenfalls auch erst nach Erreichen der eigentlichen Färbetemperatur zugesetzt werden.

Nach dem Klotzverfahren werden auf Cellulosefasern ebenfalls ausgezeichnete Farbausbeuten und ein sehr guter Farbaufbau erhalten, wobei durch Verweilen bei Raumtemperatur oder erhöhter Temperatur, beispielsweise bis zu etwa 60°C, durch Dämpfen oder mit Trockenhitze in üblicher Weise fixiert werden kann.

Ebenfalls nach den üblichen Druckverfahren für Cellulosefasern, die einphasig - beispielsweise durch Bedrucken mit einer Natriumbicarbonat oder ein anderes säurebindendes Mittel enthaltenden Druckpaste und anschließendes Dämpfen bei 100 bis 103°C, - oder zweiphasig - beispielsweise durch Bedrucken mit neutraler oder schwach saurer Druckfarbe und anschließendem Fixieren entweder durch Hindurchführen durch ein heißes elektrolythaltiges alkalisches Bad oder durch Überklotzen mit einer alkalischen elektrolythaltigen Klotzflotte und anschließendem Verweilen oder Dämpfen oder Behandlung mit Trockenhitze des alkalisch überklotzten Materials, - durchgeführt werden können, erhält man farbstarke Drucke mit gutem Stand der Konturen und einem klaren Weißfond. Der Ausfall der Drucke ist von wechselnden Fixierbedingungen nur wenig abhängig.

Bei der Fixierung mittels Trockenhitze nach den üblichen Thermofixierverfahren vervvendet man Heißluft von 120 bis 200°C. Neben dem üblichen Wasserdampf von 101 bis 103°C kann auch überhitzter Dampf und Druckdampf von Temperaturen bis zu 160°C eingesetzt werden.

Die säurebindenden und die Fixierung der Farbstoffe auf den Cellulosefasern bewirkenden Mittel sind beispielsweise wasserlösliche basische Salze der Alkalimetalle und ebenfalls Erdalkalimetalle von anorganischen oder organischen Säuren oder Verbindungen, die in der Hitze Alkali freisetzen. Insbesondere sind die Alkalimetallhydroxide und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittels sind beispielsweise Natriumhydroxid, Kaliumhydroxid, Natriumcarbonat, Natriumbicarbonat, Kaliumcarbonat, Natriumformiat, Natriumdihydrogenphosphat, Dinatriumhydrogenphosphat, Natriumtrichloracetat, Wasserglas oder Trinatriumphosphat.

Die erfindungsgemäßen Reaktivfarbstoffe der allgemeinen Formel (1) zeichnen sich durch hohe Reaktivität, gutes Fixiervermögen, sehr gutes Aufbauvermögen, sowie hohe Licht- und Schweißlichtechtheit aus. Sie können daher nach dem Ausziehfärbeverfahren bei niedrigen Färbetemperaturen eingesetzt werden und erfordern bei Pad-Steam-Verfahren nur kurze Dämpfzeiten. Die Fixiergrade sind hoch, und die nicht fixierten Anteile können leicht ausgewaschen werden, wobei die Differenz zwischen Ausziehgrad und Fixiergrad bemerkenswert klein, d. h. der Seifverlust sehr gering ist. Sie eignen sich auch besonders zum Druck, vor allem auf Baumwolle, ebenso aber auch zum Bedrucken von stickstoffhaltigen Fasern, z. B. von Wolle oder Seide oder von Mischgeweben, die Wolle oder Seide enthalten.

Des weiteren zeichnen sich die erfindungsgemäßen Reaktivfarbstoffe der allgemeinen Formel (1) darin aus, daß sich nach dem Färbeprozeß auf dem Fasermaterial nicht fixierte Farbstoffanteile sehr leicht auswaschen lassen, ohne daß Weißwäsche, die sich mit in dem Waschprozeß befindet, durch den sich ablösenden Farbstoff angeschmutzt wird. Hieraus ergeben sich Vorteile für den Färbeprozeß, in dem Waschzyklen und damit Kosten eingespart werden.

Die mit den erfindungsgemäßen Reaktivfarbstoffen der allgemeinen Formel (1) hergestellten Färbungen und Drucke besitzen, insbesondere auf Cellulosefasermaterialien, eine hohe Farbstärke und eine hohe Faser-Farbstoff-Bindungsstabilität sowohl in saurem als auch in alkalischem Bereich, weiterhin eine gute Lichtechtheit und sehr gute Naßechtheitseigenschaften, wie Wasch-, Wasser-, Seewasser-, Überfärbe- und Schweißechtheiten sowie gute Plissierechtheit, Bügelechtheit und Reibechtheit.

Die nachfolgenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in den Beispielen formelmäßig beschriebenen Verbindungen sind in Form der freien Säure angegeben. Im allgemeinen werden sie aber in Form ihrer Alkalimetallsalze, wie Lithium-, Natrium oder Kaliumsalze, hergestellt und isoliert und in Form ihrer Salze zum- Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, in die Synthese eingesetzt werden.

Die für die erfindungsgemäßen Farbstoffe angegebenen Absorptionsmaxima

(λₘₐₓ) im sichtbaren Bereich wurden anhand ihrer Alkalimetallsalze in wässriger Lösung ermittelt.

### Beispiel 1

Man suspendiert 18,4 Teile 2,4,6-Trichlor-1,3,5-triazin in 200 Teilen Eiswasser 30 Minuten bei 0-5°C. Dann fügt man in 30 Minuten 30,9 Teile (2-(Anilino)ethyl)-(2-sulfatoethyl)-sulfon hinzu und hält die Reaktionsmischung während der Zugabe durch parallele Zudosierung von 15%iger Sodalösung bei pH 2,5. Man rührt 1 Stunde bei 0-5°C nach, gibt dann 26,8 Teile 1,4-Diaminobenzol-2,5-disulfonsäure zu und stellt mit 15%iger Sodalösung auf pH 5,5. Das Reaktionsgemisch wird anschließend auf 35°C erwärmt und 30 Minuten nachgerührt. Man kühlt auf 10°C ab, versetzt mit 6,9 Teilen Natriumnitrit und tropft die Lösung in eine Vorlage aus 100 Teilen Eis und 40 Teilen konz. Salzsäure (31%). Man rührt 1 Stunde nach und entfernt den Nitritüberschuß durch Zugabe von Amidosulfonsäure.

23,9 Teile 7-Amino-1-hydroxy-naphthalin-3-sulfonsäure werden in 300 Teilen Wasser durch Zugabe von Natronlauge neutral gelöst. Diese Lösung tropft man in 30 Minuten in die 10°C-kalte Diazotierung. Es stellt sich ein pH-Wert von 1,5-2,0 ein. Man stellt mit 15%iger Sodalösung in 30 Minuten auf pH 2,5 und rührt 3 Stunden bei ansteigender Temperatur nach. Anschließend wird mit Sodalösung auf pH 6 gestellt und mit NaH₂PO₄/Na₂HPO₄ gepuffert. Die erhaltene Lösung wird eingedampft.

Man erhält einen Farbstoff der Formel

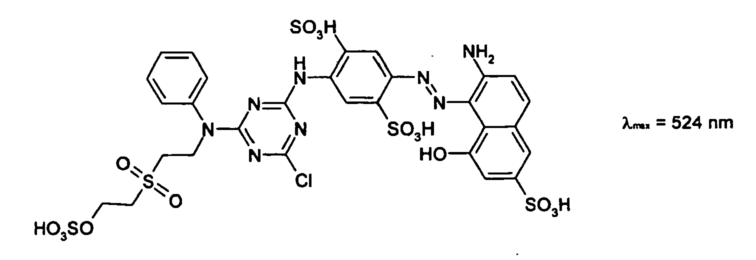

Der Farbstoff färbt und bedruckt Baumwolle in blaustichig-roten Tönen mit guten Echtheiten, insbesondere hoher Lichtechtheit.

In analoger Weise wurden die Farbstoffe der Beispiele (2) bis (32) erhalten. Dazu wurde das entsprechende reaktive Amin mit Trichlortriazin zur Reaktion gebracht und anschließend mit der Kondensationskomponente umgesetzt, diazotiert und auf die Kupplungskomponente gekuppelt.

| Bsp. | Reaktives Amin | Kondensationskomponente | Kupplungskomponente | Farbton | λₘₐₓ |
|---|---|---|---|---|---|
| 2) | (2-(Anilino)ethyl)-(2-sulfatoethyl)-sulfon | 1,4-Diaminobenzol-2,5-disulfonsäure | 7-Amino-1-hydroxy-naphthalin-3,6-disulfonsäure | Rot | 528 |
| 3) | dto. | 2,4-Diaminobenzol-1,5-disulfonsäure | 7-Amino-1-hydroxy-naphthalin-3-sulfonsäure | Rot | 519 |
| 4) | dto. | dto. | 7-Amino-1-hydroxy-naphthalin-3,6-disulfonsäure | Rot | 521 |
| 5) | dto. | 1,4-Diaminobenzol-2-sulfonsäure | 7-Amino-1-hydroxy-naphthalin-3-sulfonsäure | Rot | 517 |
| 6) | dto. | dto. | 7-Amino-1-hydroxy-naphthalin-3,6-disulfonsäure | Rot | 524 |
| 7) | dto. | 1,3-Diaminobenzol-4-sulfonsäure | 7-Amino-1-hydroxy-naphthalin-3-sulfonsäure | Rot | 510 |
| 8) | dto. | dto. | 7-Amino-1-hydroxy-naphthalin-3,6-disulfonsäure | Rot | 514 |
| 9) | (3-(Anilino)-propyl)(2-sul-fatoethyl)-sulfon | 1,4-Diaminobenzol-2,5-disulfonsäure | 7-Amino-1-hydroxy-naphthalin-3-sulfonsäure | Rot | 524 |
| 10) | dto. | dto. | 7-Amino-1-hydroxy-naphthalin-3,6-disulfonsäure | Rot | 527 |
| 11) | dto. | 2,4-Diaminobenzol-1,5-disulfonsäure | 7-Amino-1-hydroxy-naphthalin-3-sulfonsäure | Rot | 519 |
| 12) | dto. | dto. | 7-Amino-1-hydroxy-naphthalin-3,6-disulfonsäure | Rot | 521 |
| 13) | dto. | 1,4-Diaminobenzol-2-sulfonsäure | 7-Amino-1-hydroxy-naphthalin-3-sulfonsäure | Rot | 518 |
| 14) | dto. | dto. | 7-Amino-1-hydroxy-naphthalin-3,6-disulfonsäure | Rot | 524 |
| 15) | dto. | 1,3-Diaminobenzol-4-sulfonsäure | 7-Amino-1-hydroxy-naphthalin-3-sulfonsäure | Rot | 510 |
| 16) | dto. | dto. | 7-Amino-1-hydroxy-naphthalin-3,6-disulfonsäure | Rot | 514 |
| 17) | (2-(4-Sulfophenyl amino)-ethyl)-(2-sulfatoethyl)-sulfon | 1,4-Diaminobenzol-2,5-disulfonsäure | 7-Amino-1-hydroxy-naphthalin-3-sulfonsäure | Rot | 523 |
| 18) | dto. | dto. | 7-Amino-1-hydroxy-naphthalin-3,6-disulfonsäure | Rot | 528 |
| 19) | dto. | 2,4-Diaminobenzol-1,5-disulfonsäure | 7-Amino-1-hydroxy-naphthalin-3-sulfonsäure | Rot | 518 |
| 20) | dto. | dto. | 7-Amino-1-hydroxy-naphthalin-3,6-disulfonsäure | Rot | 522 |
| 21) | dto. | 1,4-Diaminobenzol-2-sulfonsäure | 7-Amino-1-hydroxy-naphthalin-3-sulfonsäure | Rot | 517 |
| 22) | dto. | 1,4-Diaminobenzol-2-sulfonsäure | 7-Amino-1-hydroxy-naphthalin-3,6-disulfonsäure | Rot | 525 |
| 23) | dto. | 1,3-Diaminobenzol-4-sulfonsäure | 7-Amino-1-hydroxy-naphthalin-3-sulfonsäure | Rot | 511 |
| 24) | dto. | dto. | 7-Amino-1-hydroxy-naphthalin-3,6-disulfonsäure | Rot | 515 |
| 25) | (3-(4-Sulfophenyl-amino)propyl)-(2-sulfatoethyl)-sulfon | 1,4-Diaminobenzol-2,5-disulfonsäure | 7-Amino-1-hydroxy-naphthalin-3-sulfonsäure | Rot | 524 |
| 26) | dto. | dto. | 7-Amino-1-hydroxy-naphthalin-3,6-disulfonsäure | Rot | 528 |
| 27) | dto. | 2,4-Diaminobenzol-1,5-disulfonsäure | 7-Amino-1-hydroxy-naphthalin-3-sulfonsäure | Rot | 519 |
| 28) | dto. | dto. | 7-Amino-1-hydroxy-naphthalin-3,6-disulfonsäure | Rot | 522 |
| 29) | dto. | 1,4-Diaminobenzol-2-sulfonsäure | 7-Amino-1-hydroxy-naphthalin-3-sulfonsäure | Rot | 518 |
| 30) | dto. | dto. | 7-Amino-1-hydroxy-naphthalin-3,6-disulfonsäure | Rot | 523 |
| 31) | dto. | 1,3-Diaminobenzol-4-sulfonsäure | 7-Amino-1-hydroxy-naphthalin-3-sulfonsäure | Rot | 510 |
| 32) | dto. | dto. | 7-Amino-1-hydroxy-naphthalin-3,6-disulfonsäure | Rot | 515 |

### Beispiel 33

21,8 Teile 4-Nitroanilin-2-sulfonsäure werden in 400 Teilen Wasser angerührt und mit Natronlauge neutralisiert. Man gibt 6,9 Teile Natriumnitrit zu und rührt bis zur vollständigen Lösung.

Die Lösung tropft man bei 0-5°C in vorgelegte 100 Teile Eis und 30 Teile konz. Salzsäure (31%) und rührt 60 Minuten nach. Der Nitritüberschuß wird durch Zugabe von Amidosulfonsäure entfernt.

31,9 Teile 7-Amino-1-hydroxynaphthalin-3,6-disulfonsäure werden in 300 Teilen Wasser mit Natronlauge neutral gelöst und in 30 Minuten zur Suspension des Diazoniumsalzes getropft. Das Reaktionsgemisch wird mit Sodalösung langsam auf pH 2 gestellt und 1 Stunde nachgerührt. Man erhält eine Farbstofflösung, die in Form der freien Säure eine Verbindung der Formel (7) 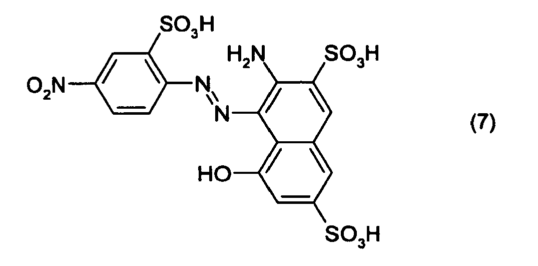 enthält.

Die Lösung der Verbindung (7) wird mit Natronlauge auf pH 8,5 gestellt und auf 70°C erwärmt. Man tropft eine Lösung von 5,6 Teilen NaHS in 50 Teilen Wasser zu und rührt 30 Minuten nach.

Die erhaltene Verbindung wird durch Zusatz von 150 Teilen Natriumchlorid ausgefällt, abfiltriert und mit wäßriger Natriumchloridlösung gewaschen.

Die erhaltene Verbindung entspricht in Form ihrer freien Säure der Formel (8)

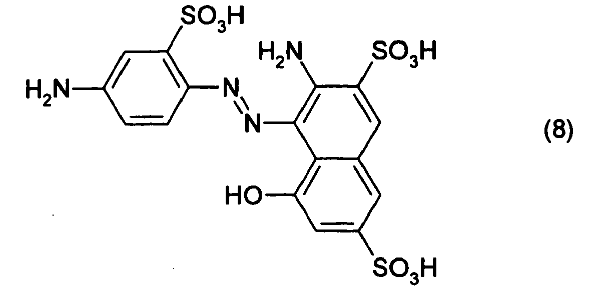

51,9 Teile der Verbindung (8) werden in 500 Teilen Wasser gelöst. Man suspendiert 18,4 Teile 2,4,6-Trichlor-1,3,5-triazin in 200 Teilen Eiswasser 30 Minuten bei 0-5°C. Dann fügt man in 30 Minuten 30,9 Teile (2-(Anilino)ethyl)-(2-sulfatoethyl)-sulfon hinzu und hält die Reaktionsmischung während der Zugabe durch parallele Zudosierung von 15%iger Sodalösung bei pH 2,5. Man rührt 1 Stunde bei 0-5°C nach und gibt die erhaltene Suspension zur Lösung der Verbindung (8). Das Reaktionsgemisch wird mit Sodalösung auf pH 6 gestellt und auf 35°C erwärmt. Man rührt 1 Stunde nach. Der Endpunkt der Reaktion wird durch

Dünnschichtchromatographie ermittelt. Durch Zugabe von Kaliumchlorid wird der Farbstoff von Beispiel 6 ausgefällt, abfiltriert und getrocknet.

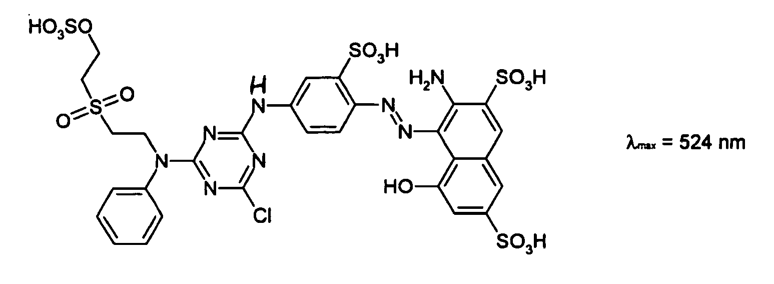

Der Farbstoff färbt Baumwolle mit blaustichig-roter Nuance.

In analoger Weise lassen sich die Verbindungen der Beispiele 4) und 11) herstellen, indem man die Verbindung (8) mit entsprechenden Triazin-Derivaten kondensiert. Durch Variation der Kupplungskomponente in Verbindung (8) lassen sich Verbindungen der allgemeinen Formel (5) nach oben beschriebenem Verfahren herstellen. Diese Verbindungen können durch Reaktion mit entsprechenden Triazin-Derivaten zu Farbstoffen der allgemeinen Formel (1) umgesetzt werden.

### Beispiel 34

51,9 Teile der Verbindung (8) werden in 500 Teilen Wasser gelöst, mit 4,2 Teilen Natriumfluorid versetzt und auf 5°C abgekühlt. Dann setzt man 13,5 Teile 2,4,6-Trifluortriazin zu. Der pH-Wert fällt zunächst ab und stellt sich dann bei ca. 4-4,5 ein. Man rührt 15 Minuten nach.

Zur Reaktionslösung tropft man anschließend eine neutrale, wässrige Lösung von 40,3 Teilen (3-(4-Sulfophenylamino-)-propyl)-(2-sulfatoethyl)-sulfon zu, lässt auf 25°C aufwärmen und hält dabei den pH-Wert durch Zugabe von Sodalösung bei 6-6,5 konstant.

Der Endpunkt der Reaktion wird durch Dünnschichtchromatographie bestimmt. Nach Eindampfen der Lösung erhält man einen Farbstoff der Formel in Form der freien Säure (9)

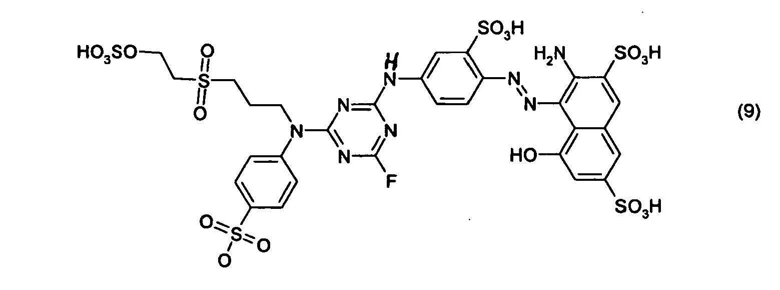

Der Farbstoff färbt Baumwolle mit blaustichig-roter Nuance.

In analoger Weise lassen sich die Verbindungen der Beispiele 35) bis 41) nach dem beschriebenen Verfahren herstellen.

| Bsp. | Reaktives Amin | Kupplungskomponente in Verbindung der Formel (12) | Farbton | λₘₐₓ |
|---|---|---|---|---|
| 35) | (3-(4-Sulfophenyl-amino)propyl)-(2-sulfatoethyl)-sulfon | 7-Amino-1-hydroxy-naphthalin-3-sulfonsäure | Rot | 518 |
| 36) | (2-(4-Sulfophenyl-amino)ethyl)-(2-sulfatoethyl)-sulfon | 7-Amino-1-hydroxy-naphthalin-3,6-disulfonsäure | Rot | 525 |
| 37) | dto. | 7-Amino-1-hydroxy-naphthalin-3-sulfonsäure | Rot | 518 |
| 38) | (2-(Anilino)ethyl)-(2-sulfatoethyl)-sulfon | 7-Amino-1-hydroxy-naphthalin-3,6-disulfonsäure | Rot | 524 |
| 39) | dto. | 7-Amino-1-hydroxy-naphthalin-3-sulfonsäure | Rot | 519 |
| 40) | (3-(Anilino)propyl)-(2-sulfatoethyl)-sulfon | 7-Amino-1-hydroxy-naphthalin-3,6-disulfonsäure | Rot | 524 |
| 41) | dto. | 7-Amino-1-hydroxy-naphthalin-3-sulfonsäure | Rot | 518 |

### Nicht erfindungsgemäßes Beispiel

32,3 Teile (3-(Anilino)propyl)-(2-sulfatoethyl)-sulfon werden in 200 Teilen Wasser durch Zugabe von 15%iger Sodalösung bei pH 5 gelöst und mit 4,6 Teilen Natriumfluorid versetzt. Man kühlt auf 0°C ab und versetzt die Lösung mit 13,5 Teilen 2,4,6-Trifluortriazin. Der pH-Wert fällt zunächst und stellt sich dann bei 3,5-4,0 ein. Das Reaktionsgemisch wird 15 Minuten nachgerührt. Man setzt dann 18,8 Teile 2,4-Diamino-benzol-1,5-disulfonsäure zu, stellt mit Sodalösung auf pH 5,5 und läßt auf 20-25°C aufwärmen. Man rührt 1 Stunde nach und gibt dann 6,9 Teile Natriumnitrit zu. Die Lösung wird dann in 30 Minuten in eine Vorlage aus 100 Teilen Eis und 50 Teilen konz. Salzsäure (31%) überführt. Die Lösung wird 1 Stunde nachgerührt, der Nitritüberschuß wird dann durch Zugabe von Amidosulfonsäure entfernt.

23,9 Teile 7-Amino-1-hydroxy-naphthalin-3-sulfonsäure werden in 300 Teilen Wasser durch Zugabe von Natronlauge neutral gelöst. Man erwärmt auf 50°C und trägt 13,4 Teile Formaldehyd-bisulfit (Na-Salz) ein. Nach 30 Minuten Nachrührzeit kühlt man auf 20°C ab und tropft die Lösung in die 10°C-kalte Diazolösung. Es stellt sich ein pH-Wert von 1,5-2 ein. Man stellt mit Sodalösung einen pH-Wert von 2-2,5 ein und rührt 3h bei ansteigender Temperatur nach. Die Lösung wird mit Sodalösung auf pH 6 gestellt, mit NaH₂PO₄/Na₂HPO₄ gepuffert und eingedampft.

Man erhält einen Farbstoff der Formel

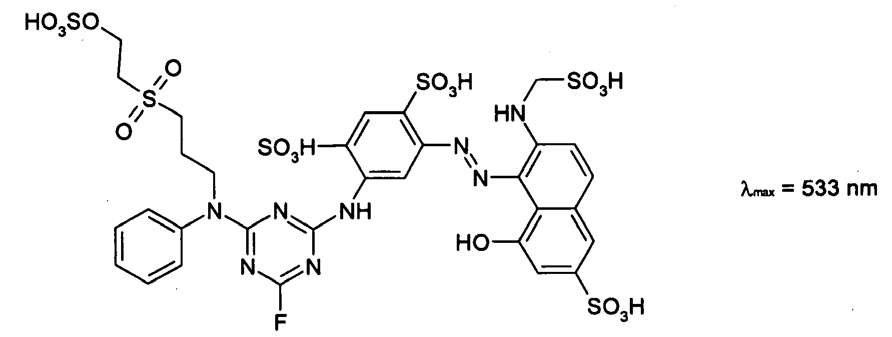

Der Farbstoff färbt Baumwolle mit blaustichig-roter Nuance.

In analoger Weise lassen sich die in nachfolgender Tabelle aufgeführten Farbstoffe der Beispiele 42) bis 65) sowie die Farbstoffe der Beispiele 34) bis 41) herstellen, indem man als Ausgangsmaterial ein reaktives Amin mit Trifluortriazin kondensiert, mit der entsprechenden Kondensationskomponente kondensiert, diazotiert und auf die entsprechende Kupplungskomponente kuppelt.

| Bsp. | Reaktives Amin | Kondensationskomponente | Kupplungskomponente | Farbton | λmax |
|---|---|---|---|---|---|
| 42) | (3-(Anilino)-propyl)-(2-sulfato-ethyl)-sulfon | 2,4-Diaminobenzol-1,5-disulfonsäure | 7-Amino-1-hydroxy-naphthalin-3-sulfonsäure | Rot | 518 |
| 43) | dto. | dto. | 7-Amino-1-hydroxy-naphthalin-3,6-disulfonsäure | Rot | 522 |
| 44) | dto. | 1,4-Diaminobenzol-2,5-disulfonsäure | 7-Amino-1-hydroxy-naphthalin-3-sulfonsäure | Rot | 525 |
| 45) | dto. | dto. | 7-Amino-1-hydroxy-naphthalin-3,6-disulfonsäure | Rot | 528 |
| 46) | dto. | 1,3-Diaminobenzol-4-sulfonsäure | 7-Amino-1-hydroxy-naphthalin-3-sulfonsäure | Rot | 510 |
| 47) | dto. | dto. | 7-Amino-1-hydroxy-naphthalin-3,6-disulfonsäure | Rot | 514 |
| 48) | (2-(Anilino)ethyl)-(2-sulfatoethyl)-sulfon | 2,4-Diaminobenzol-1,5-disulfonsäure | 7-Amino-1-hydroxy-naphthalin-3-sulfonsäure | Rot | 519 |
| 49) | dto. | dto. | 7-Amino-1-hydroxy-naphthalin-3,6-disulfonsäure | Rot | 523 |
| 50) | dto. | 1,4-Diaminobenzol-2,5-disulfonsäure | 7-Amino-1-hydroxy-naphthalin-3-sulfonsäure | Rot | 525 |
| 51) | dto. | dto. | 7-Amino-1-hydroxy-naphthalin-3,6-disulfonsäure | Rot | 528 |
| 52) | dto. | 1,3-Diaminobenzol-4-sulfonsäure | 7-Amino-1-hydroxy-naphthalin-3-sulfonsäure | Rot | 510 |
| 53) | dto. | dto. | 7-Amino-1-hydroxy-naphthalin-3,6-disulfonsäure | Rot | 514 |
| 54) | (2-(4-Sulfophenyl-amino)ethyl)-(2-sulfatoethyl)-sulfon | 2,4-Diaminobenzol-1,5-disulfonsäure | 7-Amino-1-hydroxy-naphthalin-3-sulfonsäure | Rot | 518 |
| 55) | dto. | dto. | 7-Amino-1-hydroxy-naphthalin-3,6-disulfonsäure | Rot | 521 |
| 56) | dto. | 1,4-Diaminobenzol-2,5-disulfonsäure | 7-Amino-1-hydroxy-naphthalin-3-sulfonsäure | Rot | 524 |
| 57) | dto. | dto. | 7-Amino-1-hydroxy-naphthalin-3,6-disulfonsäure | Rot | 528 |
| 58) | (2-(4-Sulfophenyl-amino)ethyl)-(2-sulfatoethyl)-sulfon | 1,3-Diaminobenzol-4-sulfonsäure | 7-Amino-1-hydroxy-naphthalin-3-sulfonsäure | Rot | 510 |
| 59) | dto. | dto. | 7-Amino-1-hydroxy-naphthalin-3,6-disulfonsäure | Rot | 515 |
| 60) | (3-(4-Sulfophenyl amino)propyl)-(2-sulfatoethyl)-sulfon | 1,4-Diaminobenzol-2,5-disulfonsäure | 7-Amino-1-hydroxy-naphthalin-3-sulfonsäure | Rot | 524 |
| 61) | dto. | dto. | 7-Amino-1-hydroxy-naphthalin-3,6-disulfonsäure | Rot | 527 |
| 62) | dto. | 2,4-Diaminobenzol-1,5-disulfonsäure | 7-Amino-1-hydroxy-naphthalin-3-sulfonsäure | Rot | 519 |
| 63) | dto. | dto. | 7-Amino-1-hydroxy-naphthalin-3,6-disulfonsäure | Rot | 522 |
| 64) | dto. | 1,3-Diaminobenzol-4-sulfonsäure | 7-Amino-1-hydroxy-naphthalin-3-sulfonsäure | Rot | 511 |
| 65) | dto. | dto. | 7-Amino-1-hydroxy-naphthalin-3,6-disulfonsäure | Rot | 515 |

### Beispiel 66

Man löst 28,1 Teile 4-(2'-Sulfatoethylsulfonyl)-anilin in 250 Teilen Wasser durch Neutralisation mit 15%iger Sodalösung. In die Lösung trägt man Teile des Farbstoffs aus Beispiel 8) ein und stellt den pH-Wert auf 5,5-6 ein. Man erwärmt auf 80°C und hält den pH-Wert im eingestellten Bereich durch Zugabe von Sodalösung. Der Reaktionsverlauf wird dünnschichtchromatographisch verfolgt.

Nach beendeter Reaktion wird die Farbstofflösung abgekühlt, gepuffert und getrocknet. Man erhält ein Pulver, dessen Struktur der Formel 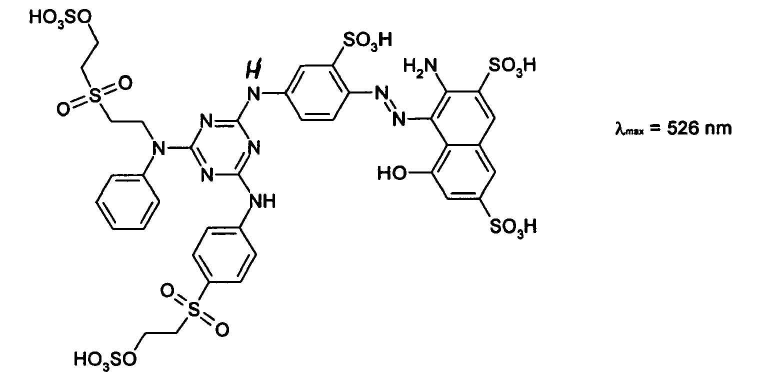 entspricht.

Er färbt Baumwolle mit blaustichig-roter Nuance mit guten Echtheiten, insbesondere hoher Lichtechtheit.

In analoger Weise erhält man die in der nachfolgenden Tabelle angegebenen Beispiele 67) bis 70), indem man als Edukt die Farbstoffe der angegebenen Beispiele mit einem reaktiven Amin kondensiert.

| Bsp. | Ausgangsfarbstoff Beispiel | Reaktives Amin | Farbton | λmax |
|---|---|---|---|---|
| 67) | 6) | 4-(2'-Sulfatoethylsulfonyl)-N-ethyl-anilin | Rot | 527 |
| 68) | 32) | 4-(2'-Sulfatoethylsulfonyl)-anilin | Rot | 516 |
| 69) | 13) | (2-(Anilino)ethyl)-(2-sulfatoethyl)-sulfon | Rot | 520 |
| 70) | 6) | (2-(Anilino)propyl)-(2-sulfatoethyl)-sulfon | Rot | 528 |

## Patentansprüche

1. Reaktivfarbstoff der allgemeinen Formel (1) 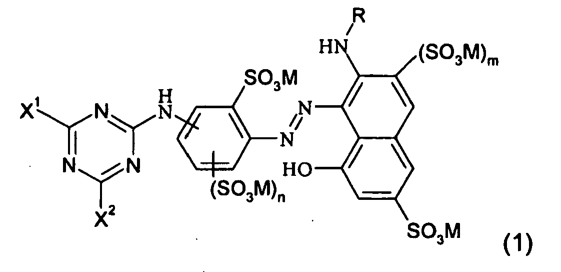 worin
R für Wasserstoff oder Alkyl steht;
X¹ Halogen, Amino, gegebenenfalls substituiertes Amino, oder X² bedeutet,
X² einen Substituenten der allgemeinen Formel (2) bedeutet 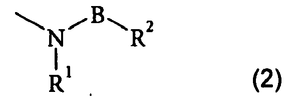 worin
R¹ für substituiertes oder unsubstituiertes Aryl steht,
B Alkylen, das durch ein Sauerstoffatom unterbrochen sein kann, bedeutet; und
R² einen Rest -SO₂CH=CH₂ oder -SO₂CH₂CH₂Z bedeutet, worin Z für eine Gruppierung steht, die durch Einwirkung von Alkali eliminiert werden kann;
n und m für 0 oder 1 stehen und
M für Wasserstoff, Ammonium, ein Alkalimetall oder das Äquivalent eines Erdalkalimetalls steht.

2. Reaktivfarbstoff gemäß Anspruch 1, **dadurch gekennzeichnet, dass** n für 1 steht.

3. Reaktivfarbstoff gemäß Anspruch 1 **dadurch gekennzeichnet, dass** er eine der Formeln (1 a) bis (1 b) aufweist 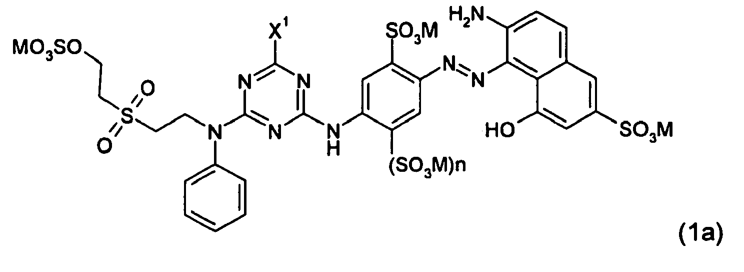 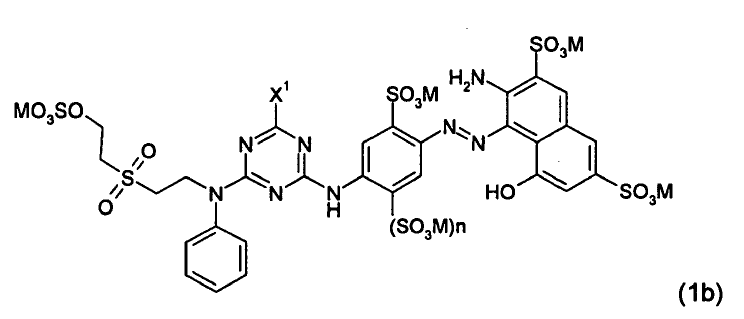 worin M, n und X1 die in Anspruch 1 angegebene Bedeutung haben.

4. Reaktivfarbstoff gemäß einem oder mehreren der Ansprüche 1 bis 3, **dadurch gekennzeichnet, dass** M Wasserstoff oder Natrium bedeutet.

5. Verfahren zur Herstellung eines Reaktivfarbstoffes gemäß einem oder mehreren der Ansprüche 1 bis 4, **dadurch gekennzeichnet, dass** man eine reaktive Aminkomponente allgemeinen Formel (3) 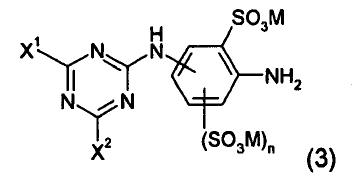 worin X¹, X², M und n wie in Anspruch 1 angegeben definiert sind, diazotiert und mit einer Verbindung der Formel (4) 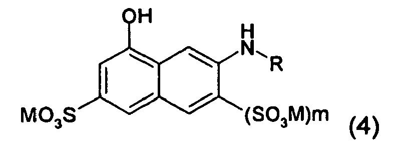 umsetzt.

6. Verfahren zur Herstellung eines Reaktivfarbstoffs der allgemeinen Formel (1) gemäβ Anspruch 1, in denen X² einen Rest der allgemeinen Formel (2) darstellt, durch Umsetzung einer Verbindung der allgemeinen Formel (5) 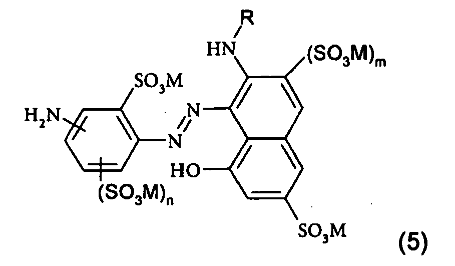 mit einem Trihalogentriazin und anschließender Kondensation mit einem Amin der allgemeinen Formel (2')

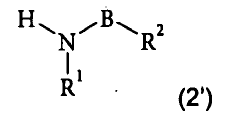

7. Verwendung eines Reaktivfarbstoffes gemäß einem oder mehreren der Ansprüche 1 bis 4 zum Färben und Bedrucken von hydroxy- und/oder carbonamidgruppenhaltigem Material, insbesondere Fasermaterial.

## Claims

1. A reactive dye of the general formula (1) 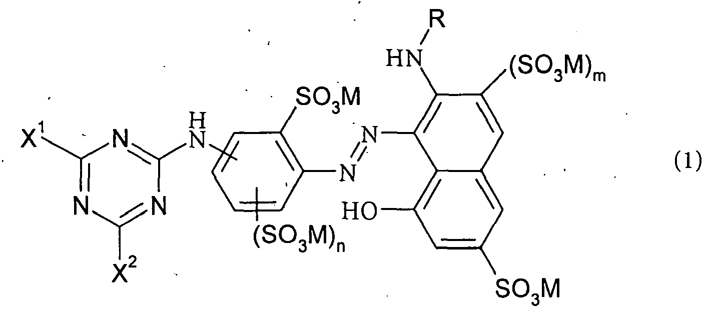 where
R is hydrogen or alkyl;
X¹ is halogen, amino, optionally substituted amino or X²,
X² is a substituent of the general formula (2) 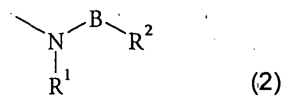 where
R¹ is substituted or unsubstituted aryl,
B is alkylene which may be interrupted by an oxygen atom; and
R² is a -SO₂CH=CH₂ or -SO₂CH₂CH₂Z radical, where Z is a moiety which can be eliminated by the action of alkali;
n and m are each 0 or 1, and
M is hydrogen, ammonium, an alkali metal or the equivalent of an alkaline earth metal.

2. A reactive dye as claimed in claim 1, wherein n is 1.

3. A reactive dye as claimed in claim 1, conforming to one of the formulae (1a) to (1b) 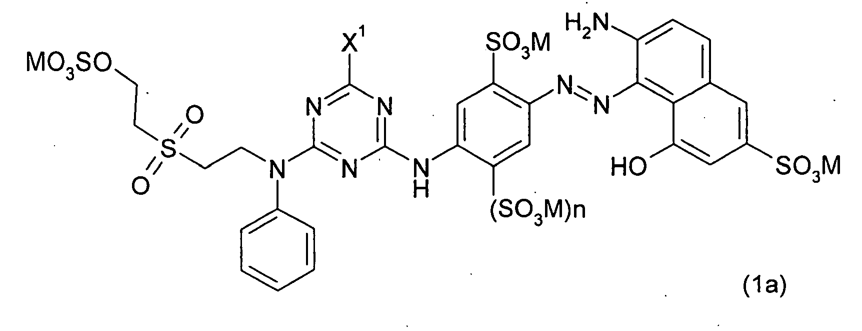 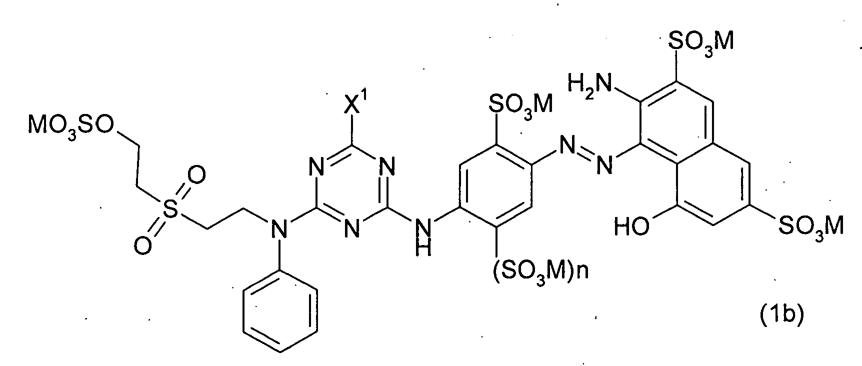 where M, n and X¹ are each as defined in claim 1.

4. A reactive dye as claimed in one or more of claims 1 to 3, wherein M is hydrogen or sodium.

5. A process for preparing a reactive dye as claimed in one or more of claims 1 to 4, which comprises a reactive amine component of the general formula (3) 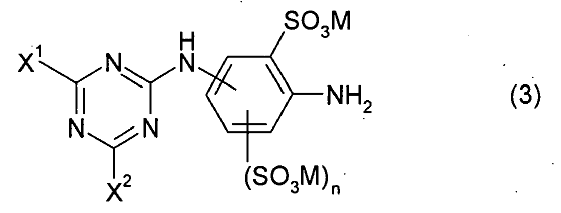 where X¹, X², M and n are each as defined in claim 1, being diazotized and reacted with a compound of the formula (4)

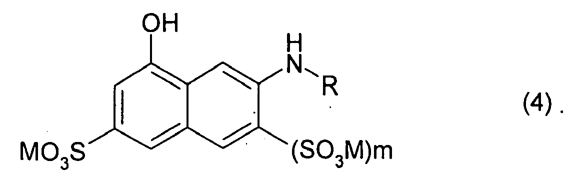

6. The process for preparing a reactive dye of the general formula (1) as claimed in claim 1 where X², is a radical of the general formula (2), by reaction of a compound of the general formula (5) 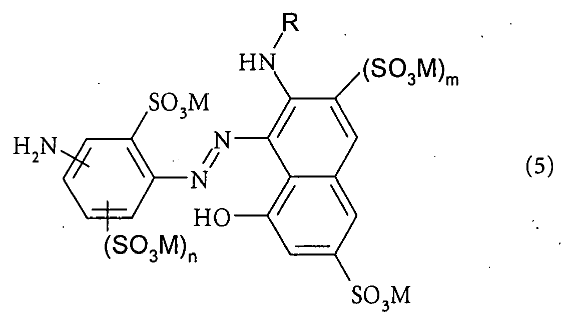 with a trihalotriazine and subsequent condensation with an amine of the general formula (2')

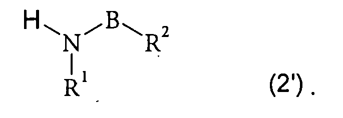

7. The use of a reactive dye as claimed in one or more of claims 1 to 4 for dyeing and printing hydroxyl- and/or carboxamido-containing material, especially fiber material.

## Revendications

1. Colorant réactif de formule générale (1) 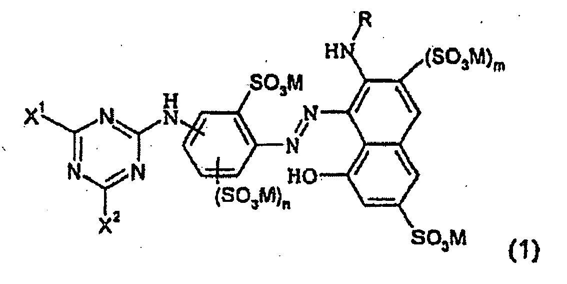 où
R représente hydrogène ou alkyle;
X¹ signifie halogène, amine, le cas échéant amino substitué, ou X²,
X² signifie un substituant de formule générale (2) 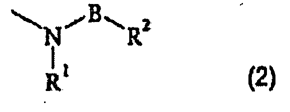
où
R¹ représente aryle substitué ou non substitué,
B signifie alkylène, qui peut être interrompu par un atome d'oxygène ; et
R² signifie un radical -SO₂CH=C ou -SO₂CH₂CH₂Z, où Z représente un groupement qui peut être éliminé sous l'influence d'alcalis ;
n et m valent 0 ou 1 et
M représente hydrogène, ammonium, un métal alcalin ou l'équivalent d'un métal alcalino-terreux.

2. Colorant réactif selon la revendication 1, **caractérisé en ce que** n vaut 1.

3. Colorant réactif selon la revendication 1, **caractérisé en ce qu'**il présente une des formules (1a) à (1b) 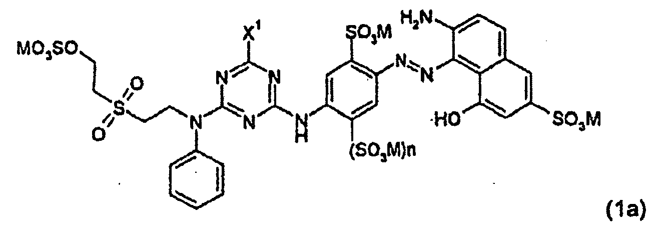 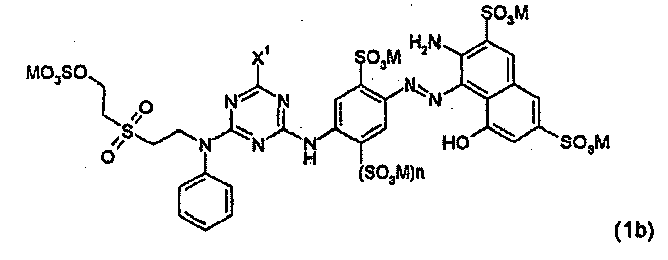 où M, n et X¹ ont la signification indiquée dans la revendication 1.

4. Colorant réactif selon l'une ou plusieurs des revendications 1 à 3, **caractérisé en ce que** M signifie hydrogène ou sodium.

5. Procédé pour la préparation d'un colorant réactif selon l'une ou plusieurs des revendications 1 à 4, **caractérisé en ce qu'**on diazote un composant amine réactif de formule générale (3) 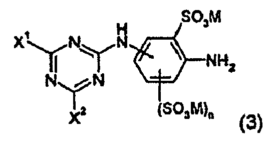 où X¹, X², M et n sont définis comme indiqué dans la revendication 1 et on transforme avec un composé de formule (4)

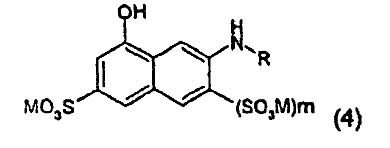

6. Procédé de préparation d'un colorant réactif de formule générale (1) selon la revendication 1, dans laquelle X² représente un radical de formule générale (2), par transformation d'un composé de formule générale (5) 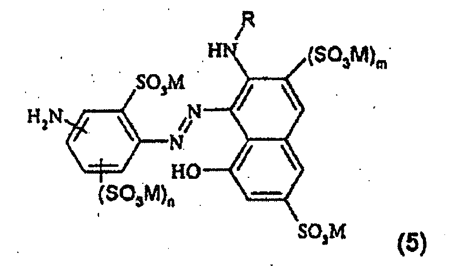 avec une trihalogénotriazine et par condensation consécutive avec une amine de formule générale (2')

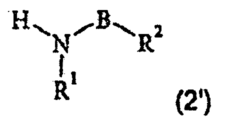

7. Utilisation d'un colorant réactif selon l'une ou plusieurs des revendications 1 à 4 pour la teinture et l'impression d'un matériau contenant des groupes hydroxy et/ou carboxamide, en particulier un matériau fibreux.
